# EUROPÄISCHE PATENTSCHRIFT

(11) **EP 3 182 020 B1**
(45) Veröffentlichungstag und Bekanntmachung des Hinweises auf die Patenterteilung: **14.11.2018**
(21) Anmeldenummer: 16198680.7
(22) Anmeldetag: 14.11.2016
(51) Int. Cl.: F24C 15/10, F24C 7/08, G01G 19/56, F24C 15/14

(54) **KOCHFELD**
HOTPLATE
TABLE DE CUISSON

(30) Priorität: 18.12.2015 DE 102015226052
(43) Veröffentlichungstag der Anmeldung: 21.06.2017
(73) Patentinhaber: E.G.O. Elektro-Gerätebau GmbH, 75038 Oberderdingen (DE)
(72) Erfinder: Egenter, Christian, 75015 Bretten (DE); Frank, Marcus, 75038 Oberderdingen (DE)
(74) Vertreter: Patentanwälte Ruff, Wilhelm, Beier, Dauster & Partner mbB

(56) Entgegenhaltungen:
- EP-A1- 0 464 925
- EP-A1- 2 802 190
- DE-A1- 19 703 532
- DE-A1-102005 052 274
- DE-U1- 9 410 156
- FR-A- 1 065 936
- JP-A- 2010 112 599

## Beschreibung

### Anwendugsgebiet und Stand der Technik

Die Erfindung betrifft ein Kochfeld mit mindestens einer Kochfeldplatte, wobei unter der Kochfeldplatte Heizeinrichtungen angeordnet sind und das Kochfeld auch eine Bedieneinrichtung aufweist.

Aus der DE 102012216935 A1 ist es bekannt, an einem Kochfeld bzw. einer Kochfeldplatte Gewichtssensoren vorzusehen. Mit diesen sollen das Gewicht und die Gewichtsverteilung von auf die Kochfeldplatte aufgestellten Töpfen erfasst werden. Dadurch ist es möglich, das Aufsetzen eines Topfes auf eine bestimmte Kochstelle am Kochfeld zu erkennen. Des Weiteren können automatisierte Kochvorgänge überwacht werden, insbesondere durch das Erfassen eines zeitlichen Verlaufs des Gewichts eines aufgestellten Topfes samt Inhalt. Dies ist bekannt aus der DE 10353299 A1.

Hierbei ist problematisch, wie einerseits eine Dichtheit des Kochfelds erreicht werden kann bzw. ein Schutz vor Eindringen von Flüssigkeit in das Kochfeld sichergestellt werden kann. Andererseits besteht das Problem, dass die Verwendung von elastischen Dichtungen zwischen Kochfeldplatte und restlichem Kochfeld die freie Bewegbarkeit der Kochfeldplatte und somit auch eine korrekte und genaue Gewichtserfassung erschweren.

Aus der EP 464925 A1 ist ein Kochfeld bekannt mit einer Kochfeldplatte, vorteilhaft aus Glaskeramik. Diese Kochfeldplatte ist mittels eines Dichtungselements an einen metallischen viereckigen Rahmen angebunden. Dieser Rahmen wiederum ist mit einer Aufnahmewanne verbunden unter der Kochfeldplatte, in der Funktionseinheiten des Kochfeldes, insbesondere Heizeinrichtungen, vorgesehen sind. Damit soll letztlich eine Gewichtsmessung auf der Kochfeldplatte ermöglicht werden.

Aus der EP 2802190 A1 ist eine Küchenarbeitsfläche bekannt mit einer Wiegeeinrichtung, insbesondere ein Kochfeld. Auch dieses ist ausgebildet für eine Gewichtsmessung auf der Oberseite einer Kochfeldplatte. Eine Aufnahmewanne unterhalb der Kochfeldplatte nimmt auch hier die Funktionseinheiten des Kochfeldes auf.

Aus der DE 102005052274 A1 ist ein weiteres Kochfeld mit einer Gewichtsmessung auf einer Kochfeldplatte bekannt. Die Kochfeldplatte ist an ihrer Außenkante umlaufend mit einer Arbeitsplatte verbunden, insbesondere mittels einer elastischen Dichtung, damit diese Verbindung dicht ist. Die Kochfeldplatte liegt auf Gewichtssensoren auf für eine Gewichtsmessung.

### Aufgabe und Lösung

Der Erfindung liegt die Aufgabe zugrunde, ein eingangs genanntes Kochfeld zu schaffen, mit dem Probleme des Stands der Technik gelöst werden können und es insbesondere möglich ist, eine Gewichtserfassung an der Kochfeldplatte möglichst verfälschungsfrei vorzunehmen und dabei die Gebrauchstauglichkeit des Kochfelds hinsichtlich normalen Gebrauchs und Dichtheit zu erhalten.

Gelöst wird diese Aufgabe durch ein Kochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass das Kochfeld mindestens eine Kochfeldplatte aufweist, vorteilhaft eine einzige Kochfeldplatte, an der sämtliche Kochstellen vorgesehen sind und unter der sämtliche Heizeinrichtungen angeordnet sind. Alternativ kann das Kochfeld mehrere Kochfeldplatten aufweisen, die dann vorteilhaft pro Kochstelle bzw. pro Heizeinrichtung vorgesehen sind.

Die Kochfeldplatte sollte also die Heizeinrichtungen überdecken, so dass über jeder Heizeinrichtung eine Kochfeldplatte verläuft, auf die ein Topf aufgestellt werden kann. Bevorzugt überdeckt die Kochfeldplatte die Heizeinrichtungen an deren Oberseite und bildet dabei den Oberteil oder die Oberseite des Kochfelds über die gesamte Breite und einen Großteil der Tiefe, besonders bevorzugt die gesamte Tiefe des Kochfelds im Kochbereich.

Das Kochfeld weist ein Kochfeldgehäuse unter der Kochfeldplatte auf. Das Kochfeldgehäuse enthält unter anderem die Heizeinrichtungen bzw. weist diese auf. Zusätzlich können weitere Funktionseinheiten des Kochfelds daran oder darin vorgesehen sein, beispielsweise Leistungssteller bei einem Induktionskochfeld, unter Umständen auch die Bedieneinrichtung.

Die Kochfeldplatte ist gegenüber dem Kochfeldgehäuse abnehmbar ausgebildet, insbesondere werkzeuglos abnehmbar. Sie ist auf mindestens drei Auflagestützen derart aufgesetzt, dass sie nur auf diesen aufliegt und vorteilhaft nur mit diesen Kontakt hat bzw. nur diese Auflagestützen berührt. Die Kochfeldplatte ist gegenüber dem Kochfeldgehäuse in vertikaler Richtung bewegbar, insbesondere nicht nur weil sie so abnehmbar ist, sondern weil sie an den Auflagestützen in vertikaler Richtung bewegbar ist. An den bzw. für die Auflagestützen sind Gewichtssensoren vorgesehen zur Messung der Gewichtsbelastung der aufliegenden Kochfeldplatte bzw. durch die aufliegende Kochfeldplatte samt möglicher Last bzw. Töpfe darauf. Diese Gewichtssensoren bzw. die Lagerung der Auflagestützen können, je nach Ausbildung, bei Gewichtsbelastung eine gewisse vertikale Bewegbarkeit haben oder ermöglichen, insbesondere im Zusammenhang mit einer Kraft-Weg-Kennlinie, wodurch eine vertikale Bewegbarkeit der Kochfeldplatte bei Auflage auf den Auflagestützen entsteht. Dieser Weg bzw. diese vertikale Bewegbarkeit kann unter Umständen sehr gering sein, beispielsweise bei auf Druck wirkenden Piezo-Gewichtssensoren. Dennoch ist so eine Gewichtsmessung möglich. Dies ist dem Fachmann aber grundsätzlich bekannt.

Dadurch, dass die Kochfeldplatte sozusagen nur auf den Auflagestützen mit den Gewichtssensoren aufliegt und ansonsten möglichst keinen Kontakt mit dem übrigen Kochfeld oder dem Kochfeldgehäuse aufweist bzw. diese berührt, kann eine Verfälschung der Messung der Gewichtserfassung vermieden werden. Die mindestens drei Auflagestützen sind dabei so verteilt, insbesondere als Dreieck möglichst weit voneinander entfernt aufgespannt, dass die Kochfeldplatte sicher darauf ruht. In vorteilhafter Ausgestaltung der Erfindung sind bei einer rechteckigen Kochfeldplatte vier Auflagestützen vorgesehen, eine in jedem Eckbereich. Unter Umständen kann, insbesondere auch zur mechanischen Stützung der Kochfeldplatte, in einem Mittelbereich eine weitere Auflagestütze samt Gewichtssensor vorgesehen sein, vorteilhaft ausgebildet wie alle anderen.

Wie aus der vorgenannten DE 102012216935 A1 bekannt ist, kann durch Auswertung aller Gewichtssensoren die Gewichtsbelastung sowie die Verteilung der Gewichtsbelastung auf der Kochfeldplatte durch aufgestellte Töpfe erkannt werden.

Bei der Erfindung weist das Kochfeld eine obere Abdeckplatte auf, die in etwa oder mindestens die Fläche der Kochfeldplatte überdeckt. Die Abdeckplatte verläuft unter der Kochfeldplatte mit einem Abstand von 1 mm bis 10 mm, bevorzugt eher mit einem geringen Abstand. Die Abdeckplatte kann fest am Kochfeldgehäuse vorgesehen sein, vorteilhaft darauf. Sie sollte nicht von der Kochfeldplatte berührt werden, so dass eine Verbindung der Kochfeldplatte mit den Auflagestützen, insbesondere die Auflagestützen selbst, durch die Abdeckplatte hindurch verläuft. So sind Auflagestützen und Kochfeldplatte von der Abdeckplatte mechanisch getrennt. Dazu kann die Abdeckplatte entsprechende Öffnungen aufweisen, die im Sinne einer ausreichenden Dichtheit des gesamten Kochfelds nur geringfügig größer sein sollten als die durch sie hindurchlaufende Verbindung bzw. die Auflagestützen. Die Abdeckplatte reicht von einer linken Lateralseite des Kochfelds bis zu einer rechten Lateralseite des Kochfelds sowie bis zu einer hinteren Lateralseite. Nach vorne zu kann sie unter der Kochfeldplatte vorstehen bzw. diese überragen. Dabei ist es möglich, dass die Abdeckplatte zumindest teilweise bis an eine vordere Lateralseite des Kochfelds reicht, unter Umständen Ausschnitte aufweist für die Bedieneinrichtung. Vorteilhaft bildet die Abdeckplatte den umlaufenden Außenrand bzw. eine Außenbegrenzung des Kochfelds.

Bei der Erfindung weist die genannte Abdeckplatte Ausnehmungen auf für die Heizeinrichtungen. Diese Ausnehmungen sind bei der Erfindung derart, dass entsprechend ausgebildete Heizeinrichtungen durch diese Ausnehmungen hindurchragen und insbesondere bis kurz vor die Unterseite der Kochfeldplatte reichen, diese aber eben nicht berühren. Ein solcher Abstand zur Unterseite der Kochfeldplatte beträgt 0,5 mm bis 10 mm. Dies ist beispielsweise möglich für Strahlungsheizeinrichtungen als Heizeinrichtungen, die bekanntermaßen möglichst nahe an die Unterseite der Kochfeldplatte reichen sollten.

Bei der Erfindung sind die Ausnehmungen in der Abdeckplatte derart ausgebildet, dass die Heizeinrichtungen darin bzw. innerhalb jeweils einer Ausnehmung angeordnet sind. An sich verlaufen die Heizeinrichtungen vorteilhaft unterhalb der Ebene der Abdeckplatte. Zur Erreichung der vorgenannten Dichtigkeit sind die Ausnehmungen mit einer Abdeckung dichtend verschlossen. Dies weist den Vorteil auf, dass eine solche Ausgestaltung für die Verwendung von Induktionsheizspulen als Heizeinrichtungen vorteilhaft ist und gleichzeitig eine Abdeckplatte aus Metall vorgesehen sein kann. Eine solche Abdeckplatte aus Metall würde jedoch die Funktion von darunter angeordneten Induktionsheizspulen negativ beeinträchtigen, so dass eben die Ausnehmungen in der metallischen Abdeckplatte vorgesehen sind, die dann wiederum mittels Abdeckungen aus Kunststoff, Keramik odgl., welche die Funktion der Induktionsheizspule nicht beeinträchtigen, verschlossen sind bzw. abgedichtet sind. In einem solchen Fall kann allgemein eine Heizeinrichtung entweder direkt unter der Abdeckung angeordnet sein oder mit einem Abstand von 0,5 mm bis 10 mm zur Unterseite der Abdeckung angeordnet sein. In entsprechendem Maß kann die Heizeinrichtung auch mit einem solchen Abstand unterhalb einer wesentlichen Verlaufsebene der Abdeckplatte angeordnet sein, so dass beispielsweise im Fall von Induktionsheizspulen diese auch keinen großen Abstand zur Unterseite der Kochfeldplatte aufweisen für einen ausreichend guten Wirkungsgrad der induktiven Beheizung.

In vorteilhafter Ausgestaltung der Erfindung ist zumindest in einem vorderen Bereich des Kochfelds bzw. der Kochfeldplatte eine längliche Vertiefung in der Abdeckplatte vorgesehen, welche parallel zur Vorderkante der Kochfeldplatte verläuft. Diese Vertiefung ist nach Art einer Rinne oder Auffangrinne ausgebildet mit einer Breite zwischen 2 mm und 20 mm und einer Tiefe zwischen 2 mm und 20 mm. Eine solche Vertiefung kann zwischen 1 mm und 30 mm weg von der Vorderkante der Kochfeldplatte zu einem Mittelbereich bzw. nach innen versetzt sein, so dass die Vertiefung von der Kochfeldplatte direkt überdeckt wird, entweder ganz oder teilweise. Eine solche Vertiefung dient dazu, dass Flüssigkeit, die auf der Kochfeldplatte ausgelaufen ist, über eine vordere Kante der Kochfeldplatte nach unten läuft in Richtung auf die darunter verlaufende Abdeckplatte. Zumindest auf einem Weg zu einem Mittelbereich des Kochfelds wird die Flüssigkeit dann in der Vertiefung gesammelt und bleibt dort stehen. Dazu ist die Vertiefung vorteilhaft abgedichtet bzw. wasserdicht ausgebildet, also geschlossen und ohne Öffnungen. Eine entsprechende Vertiefung kann auch an der linken und der rechten Lateralseite des Kochfelds bzw. unter der Kochfeldplatte in der Abdeckplatte vorgesehen sein, vorteilhaft auch an der hinteren Lateralseite. Auch hier dient die Vertiefung dazu, von der Kochfeldplatte herunterlaufende Flüssigkeit aufzufangen, so dass sie eine Art Dichtung bildet, insbesondere eine Art Labyrinthdichtung. Besonders vorteilhaft kann die Vertiefung an den Lateralseiten, an denen sie vorhanden ist, durchgehend verlaufen, insbesondere als umlaufende Vertiefung. Sie kann dabei einen vorgenannten Heizbereich umlaufen oder umschließen, innerhalb dem die Heizeinrichtungen angeordnet sind. Eine Abdichtung des Kochfelds erfolgt hier also nicht durch eine geschlossene Verbindung der Kochfeldplatte als Oberseite mit dem sonstigen Kochfeld bzw. Kochfeldgehäuse, sondern durch eine Art Labyrinthdichtung samt Auffangrinne odgl.. Vor allem die Auffangfunktion ist hier von Bedeutung.

An sich ist vorgesehen, dass über die Kochfeldplatte überlaufende Flüssigkeit in der vorgenannten Vertiefung oder Auffangrinne gesammelt wird und nach Abnehmen, insbesondere werkzeuglosem Abnehmen, der Kochfeldplatte problemlos entfernt oder aufgewischt werden kann. Falls aber so viel Flüssigkeit auf der Kochfeldplatte vorhanden ist bzw. in die Vertiefung hineinläuft, dass sie nach innen überzulaufen droht, sollte vorgesehen sein, dass innerhalb der Vertiefung zu einem Mittelbereich bzw. einem Heizbereich hin ein Streifenbereich der Abdeckplatte vorgesehen ist, der keine Durchbrechung durch sie hindurch aufweist oder in dem zumindest keine Öffnung in der Abdeckplatte vorgesehen ist, durch die Flüssigkeit hindurchgelangen könnte in das Kochfeld bzw. in das Kochfeldgehäuse hinein. Ein solcher Streifenbereich kann mindestens 1 cm bis 5 cm breit sein. Die vorgenannten Ausnehmungen mit den Abdeckungen darin, unter denen Heizeinrichtungen angeordnet sind, können ja abgedichtet mit der Abdeckplatte verbunden sein, so dass hier keine Flüssigkeit hindurchtreten kann.

In weiterer vorteilhafter Ausgestaltung der Erfindung ist ein Temperatursensor unterhalb der Kochfeldplatte vorgesehen, vorteilhaft an einer Kochstelle bzw. in einem Bereich oberhalb einer Heizeinrichtung. Der Temperatursensor sollte elastisch bzw. federnd an die Unterseite der Kochfeldplatte angedrückt sein, wie dies an sich beispielsweise von Temperatursensoren für Induktionsheizspulen bekannt ist. Für eine solche elastische bzw. federnde Andrückung können Federn vorgesehen sein, insbesondere elektrische Kontaktfedern, die also auch gleichzeitig eine elektrische Kontaktierung an den Temperatursensor übernehmen. So ist es also möglich, dass die Temperatursensoren zusätzlich zu den vorbeschriebenen Auflagestützen die einzigen Teile des Kochfelds sind, die die Kochfeldplatte berühren. Wenn eine solche Federkraft der Temperatursensoren aber sehr gering ist, so ist auch der dadurch entstehende Fehler sehr gering. Des Weiteren ist die Federkraft gerade bei der Verwendung von metallischen Federn anstatt Federn aus hochelastischen Stoffen, vorteilhaft Silikon oder Elastomere, bekannt und gleichbleibend, bei entsprechender Ausgestaltung der Federn auch konstant. Ein entsprechender Fehler bei der Gewichtserfassung an der Kochfeldplatte durch die Gewichtssensoren kann also relativ leicht herausgerechnet werden.

Vorteilhaft ist ein Temperatursensor ein an sich üblicher Widerstandstemperatursensor, beispielsweise ein NTC. Dies ist aber aus dem Stand der Technik bekannt.

Ein Temperatursensor ist vorteilhaft in einem Mittelbereich der Heizeinrichtung angeordnet. Werden Induktionsheizspulen als Heizeinrichtung verwendet, so kann der Temperatursensor wie üblich in einem Mittelbereich ohne Windungen vorgesehen sein. Vorteilhaft ist der Temperatursensor in einer mittigen Vertiefung in einer vorbeschriebenen Abdeckung angeordnet. Dabei ist zu beachten, dass der Temperatursensor auf einer Seite der Abdeckung sein soll, nämlich darüber, und eine entsprechende Ansteuerung und Auswertung auf der anderen Seite. Somit sind elektrische Kontaktierungen oder eine Ansteuerung für den Temperatursensor vorzusehen, die durch die Abdeckung hindurch verlaufen, vorteilhaft auch innerhalb der Vertiefung. Durch die Anordnung der Temperatursensoren in einem Mittelbereich einer Heizeinrichtung ist aber gewährleistet, dass der Abstand zu einem Rand der Kochfeldplatte bzw. zu einer vorgenannten Vertiefung in der Abdeckplatte so groß ist, dass hier kaum zu befürchten ist, dass Flüssigkeit bis zum Temperatursensor unterhalb der Kochfeldplatte vordringt. Vor allem aber ist hier einfach auch eine dichte Hindurchführung leicht möglich, beispielsweise durch nachträgliches Anbringen von Kleber, Dichtelementen, Dichtmasse oder Einlegen der Durchführungen in einem Mehr-Komponenten-Fertigungsverfahren. Diese können im Übrigen auch verwendet werden, um eine Abdeckung innerhalb der Abdeckplatte zu befestigen und gegenüber dieser abzudichten.

Eine Bedieneinrichtung für das Kochfeld kann in einem vorderen Bereich des Kochfelds vorgesehen sein, vorteilhaft außerhalb der Kochfeldplatte, besonders davor oder auch daneben. Dies weist den Vorteil auf, dass dann keine aufwändige elektrische Kontaktierung vorzunehmen ist, um die Kochfeldplatte abnehmbar auszugestalten. Des Weiteren kann dann eine Bedienung der Bedieneinrichtung nicht das Ergebnis einer Gewichtsmessung an der Kochfeldplatte verfälschen, beispielsweise durch aufgelegte oder aufgedrückte Finger bei einer Bedieneinrichtung mit Berührungsschaltern. Somit kann die Bedieneinrichtung eine eigene Bedienabdeckung als Bedienfläche aufweisen, wobei diese Bedienabdeckung vorteilhaft aus demselben Material wie die Kochplatte besteht mit derselben Färbung bzw. derselben Materialstärke. Es könnte zwar auch in einem Ausschnitt in der Kochfeldplatte eine vorteilhaft rechteckige Bedienabdeckung der Bedieneinrichtung vorgesehen sein. Vorteilhaft verläuft die Bedienabdeckung aber über die gesamte Breite des Kochfelds, also von einer linken bis zu einer rechten Lateralseite der Kochfeldplatte, oder über die gesamte Tiefe, also von der hinteren Lateralseite der Kochfeldplatte bis zur vorderen. Die Tiefe bzw. Breite der Bedienabdeckung sollte konstant sein und kann beispielsweise 5 cm bis 10 cm oder sogar 15 cm betragen. Die Bedieneinheit kann jedoch ebenso im abnehmbaren Teil der Kochfeldplatte angeordnet sein, sie würde in diesem Fall mit abgenommen werden. Zur Verbindung, insbesondere zur elektrischen Verbindung, könnte in diesem Fall eine geeignete drahtgebundene und lösbare oder drahtlose Verbindung vorgesehen sein.

Die Bedienabdeckung ist vorteilhaft abgedichtet mit dem Kochfeldgehäuse verbunden, so dass hier keinerlei Gefahr eines Eintritts von Flüssigkeit besteht. Hier ist eine starre Befestigung und dauerhafte Abdichtung auch leicht möglich, da die Bedienabdeckung nicht bewegbar sein muss, beispielsweise eine Verklebung. Ein Abstand zwischen einer solchen Bedienabdeckung und der vorgenannten Kochfeldplatte kann relativ gering sein, beispielsweise 1 mm bis 10 mm betragen. Durch diesen relativ schmalen Spalt hindurchtretende Flüssigkeit kann höchstens, da die Bedienabdeckung ja abgedichtet verbunden ist mit der Bedieneinrichtung bzw. dem Kochfeldgehäuse, nur unterhalb die Kochfeldplatte laufen bzw. kriechen. Hier ist dann aber vorteilhaft zuerst einmal die vorgenannte umlaufende Vertiefung vorgesehen, die die Flüssigkeit auffängt und somit eine Art Dichtung nach innen in das Kochfeldgehäuse darstellt.

In vorteilhafter Ausgestaltung der Erfindung sind die Auflagestützen fest im Kochfeld bzw. im Kochfeldgehäuse montiert, wobei die Kochfeldplatte einfach nur sozusagen lose darauf aufgelegt ist. Für ein genaues und positionsgetreues Auflegen der Kochfeldplatte auf die Abdeckungen kann vorgesehen sein, dass an der Unterseite der Kochfeldplatte und der Oberseite der Auflagestützen zueinander korrespondierende Vorsprünge und Vertiefungen vorgesehen sind, insbesondere konzentrisch. So kann ein seitliches Verschieben der Kochfeldplatte durch versehentliches Anstoßen verhindert werden. Diese Elemente weisen vorteilhafter für verschiedene Auflagestützen verschiedene Formen auf, sodass ein falsches Auflegen der Kochfeldplatte ausgeschlossen werden kann.

In einer Ausgestaltung der Erfindung können an fest montierten Auflagestützen oben oder unten vorbeschriebene einfache Gewichtssensoren vorgesehen sein, beispielsweise zuvor genannte Piezo-Gewichtssensoren oder Gewichtssensoren mit einem druckabhängigen veränderlichen elektrischen Widerstand. In einer vorteilhaften Ausgestaltung der Erfindung sind im Kochfeldgehäuse längliche Träger vorgesehen, die im Wesentlichen horizontal verlaufen. Vorteilhaft bestehen sie aus Metall oder Keramik. An einem freien Ende sind die Träger fest montiert, wobei sie in etwa horizontal verlaufen. An einem anderen freien Ende weist ein Träger eine nach oben durch die Abdeckplatte hindurchragende Auflagestütze auf. Eine Bewegbarkeit zur Erzeugung des vorgenannten Bewegungswegs für die Gewichtsmessung kann hier durch eine gewisse Verbiegbarkeit des Trägers erreicht werden. Diese Verbiegung steht in einem festen Zusammenhang mit einer auf die Auflagestütze wirkenden Gewichtskraft, so dass diese so ausgerechnet werden kann. Dazu kann beispielsweise mindestens ein Dehnmessstreifen verwendet werden. Solche Gewichtssensoren sind auch als Wägezellen in der Form eines Biegebalkens bekannt. Genauso können jedoch auch andere Ausführungen bzw. Formen von Wägezellen eingesetzt werden.

In einer speziellen Ausgestaltung der Erfindung kann vorgesehen sein, dass in dem Träger ein in Längsrichtung, also horizontal, verlaufender Schlitz vorgesehen ist. Oberhalb und unterhalb jeweils der Enden des Schlitzes sind horizontal ausgerichtete Dehnmessstreifen vorgesehen, insgesamt also vier Stück. Wird auf eine an einem freien Ende des Trägers angebrachte Auflagestütze eine Gewichtskraft ausgeübt, so verbiegt sich der Träger nicht einfach nur nach unten, sondern wird durch den Schlitz quasi parallel verschoben. Verstärkt werden kann dies noch dadurch, dass in den Endbereichen des Schlitzes Erweiterungen vorgesehen sein können als eine Art Verbreiterung des Schlitzes, wobei dann die genannten Dehnmessstreifen oberhalb und unterhalb dieser Erweiterungen angeordnet sind. Durch diese Ausgestaltung des Schlitzes ist eine spezielle Verformung des Trägers möglich, die wiederum besonders gut ausgewertet werden kann. Dieser Aufbau ist dem Fachmann bekannt.

Die Signale der Dehnmessstreifen können auf an sich bekannte, unterschiedliche Art und Weise ausgewertet werden. Vorteilhaft können vier Dehnmessstreifen als Wheatstone-Brücke verschaltet sein zur elektrischen Auswertung.

In Ausgestaltung der Erfindung kann als Verzierung und/oder als mechanische Verstärkung im Außenbereich der Kochfeldplatte ein umlaufender Rahmen vorgesehen sein oder auch nur einzelne Seitenteile mit einer Länge im Wesentlichen entsprechend einer Seitenlänge der Kochfeldplatte vorgesehen sein. Diese Seitenteile oder dieser Rahmen können vor allem auch an der Unterseite der Kochfeldplatte vorgesehen sein und ein ungewünschtes Durchbiegen der Kochfeldplatte verhindern. Bei entsprechend weit nach innen gezogenen Rahmen oder Seitenteilen kann sogar vorgesehen sein, dass die Auflagestützen nicht direkt an die Unterseite der Kochfeldplatte angreifen, sondern eben an Rahmen oder Seitenteile. Dann kann auch eine spezielle Auflagegeometrie, insbesondere mit den vorgenannten Vorsprüngen und Ausnehmungen, leichter ausgebildet werden als direkt an einer Unterseite der Kochfeldplatte, die üblicherweise aus Glaskeramik besteht, so dass weitere Funktionsteile angeklebt werden müssten. Auch eine Kombination aus Verzierung im Außenbereich und Versteifung bzw. Auflagegeometrien auf der Unterseite in der Form eines oder mehrerer Bauteile ist denkbar.

Eine Auswertung der Gewichtssensoren, insbesondere als Teil einer Steuerung des gesamten Kochfelds, kann aus den Sensorsignalen der Gewichtssensoren auf an sich bekannte Art und Weise eine Vielzahl von Informationen und Handlungsanweisungen sowie Sicherheitsfunktionen entwickeln. So kann nicht nur eine relative Änderung der Gewichtsbelastung an den Gewichtssensoren bzw. Auflagestützen herangezogen werden, sondern auch eine absolute. Grundsätzlich kann eine Auswertung der Gewichtssensoren in ihrer Gesamtheit sowie ihrer Beziehung zueinander erfolgen wie es in der vorgenannten DE 102012216935 A1 beschrieben ist. Als Sicherheitsfunktion kann beispielsweise vorgesehen sein, dass ohne Gewichtsbelastung durch eine auf die Auflagestützen aufgelegte Kochfeldplatte ein Betrieb des Kochfelds nicht möglich ist oder nur eingeschränkt möglich ist. Hierzu können unter Umständen auch Signale von den zuvor beschriebenen Temperatursensoren verwendet werden.

Die Temperatursensoren könnten beim Abnehmen und Wiederauflegen der Glaskeramik ebenfalls beschädigt werden. Eine Kochfeldsteuerung muss also auch prüfen, dass sie vorhanden sind bzw. funktionieren und an der Glaskeramik anliegen. Ein Vorhandensein kann auf einfache Art und Weise geprüft werden, indem vor Betrieb einer Heizeinrichtung ihr Messwert bzw. Widerstandswert überprüft wird. Liegt er im Rahmen einer plausiblen Umgebungstemperatur oder auch plausiblen Temperaturanstiegsgeschwindigkeiten bei Leistungsabgabe durch die Heizeinrichtungen, so sind die Temperatursensoren wahrscheinlich unbeschädigt. Ein Anliegen an der Unterseite der Kochfeldplatte kann durch die die Gewichtsmessung geprüft werden. Sowohl das Gewicht der abnehmbaren Kochfeldplatte als auch die Anpresskraft der Temperatursensoren können in einer Kochfeldsteuerung hinterlegt werden. Ohne das Anliegen der Temperatursensoren an der Kochfeldplatte müssen die Gewichtssensoren also deren Gewicht minus der Summe der Anpresskräfte messen, absolut gesehen also etwas mehr Gewicht als bei angedrückten Temperatursensoren.

Vorteilhaft kann die Erfindung bei einem Kochfeld mit mehreren einzelnen bzw. diskreten Heizeinrichtungen als Kochstellen verwendet werden, beispielsweise mit vier bis sechs Heizeinrichtungen und entsprechend vielen getrennten Kochstellen. Alternativ kann auch eine Mehrzahl von Heizeinrichtungen vorgesehen sein für ein sogenanntes Flächenkochen entsprechend der WO 2006/032292 A1 oder Zonenkochen entsprechend der DE 102011083125 A1. Dann kann es sein, weil diese Heizeinrichtungen dabei sehr nahe beieinander angeordnet sind und insgesamt eine große Fläche bedecken, dass die Abdeckplatte mehr eine Art umlaufender Abdeckrahmen ist mit der vorgenannten Vertiefung, um Flüssigkeit aufzufangen. Innerhalb der Vertiefung verläuft ein solcher Abdeckrahmen dann aber nur mit einer geringen Breite, da dann entweder eine sehr große oder mehrere Ausnehmungen vorgesehen sind für die Heizeinrichtungen.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schräge Draufsicht auf ein erfindungsgemäßes Kochfeld mit Kochfeldplatte, das in einer Arbeitsplatte eingebaut ist,
- Fig. 2: das Kochfeld aus Fig. 1 mit abgenommener Kochfeldplatte,
- Fig. 3: eine schräge Schnittdarstellung durch die Anordnung einer Induktionsheizspule in einer Abdeckplatte unter der Kochfeldplatte und
- Fig. 4: eine Schnittdarstellung durch das Kochfeld aus Fig. 1 mit Anordnung von Auflagestützen.

### Detaillierte Beschreibung der Ausführungsbeispiele

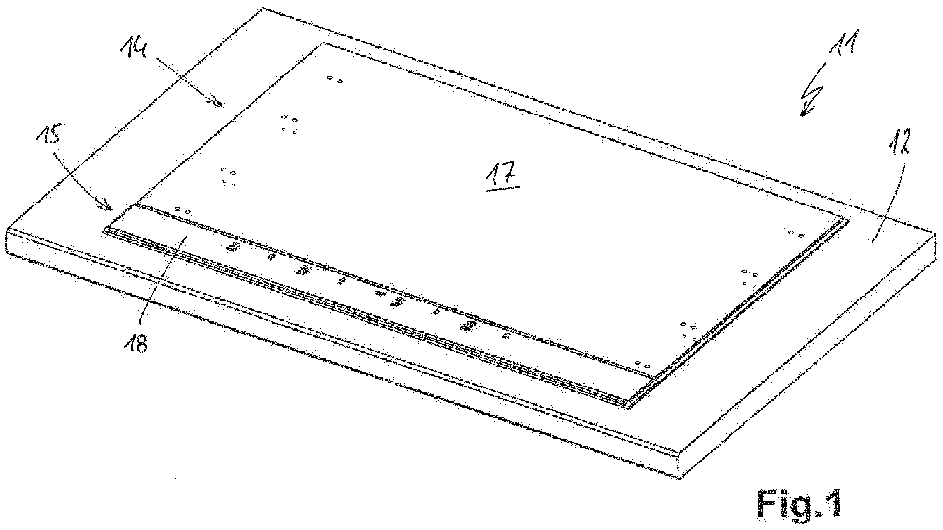

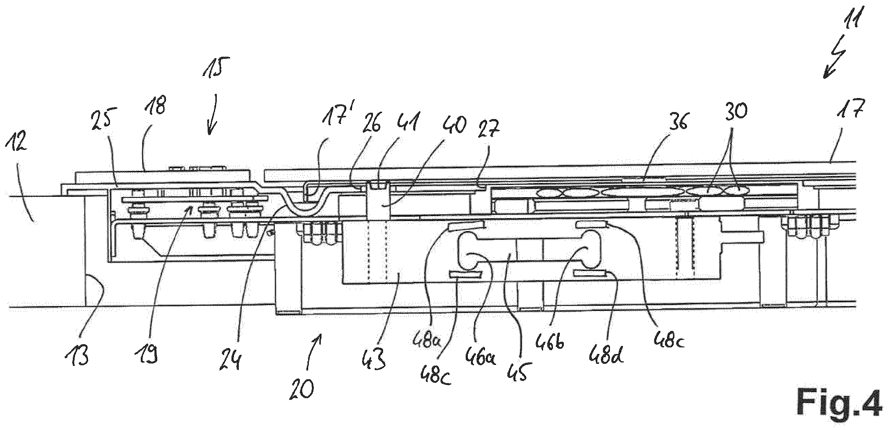

In der Fig. 1 ist ein erfindungsgemäßes Kochfeld 11 dargestellt, das in einer Arbeitsplatte 12 eingebaut ist. Die genaue Einbausituation kann auch aus der Schnittdarstellung der Fig. 4 ersehen werden. Im Wesentlichen ist es ein üblicher Einbau mit Versenken in einem entsprechenden Ausschnitt 13 in der Arbeitsplatte 12. Das Kochfeld 11 weist flächenmäßig hauptsächlich einen hinteren über die gesamte Breite gehenden großen Kochbereich 14 auf, während vorne ein schmaler, ebenfalls über die gesamte Breite durchgehender kleiner Bedienbereich 15 vorgesehen ist. Im Kochbereich 14 liegt die Kochfeldplatte 17 auf, die über die gesamte Breite geht und einen wesentlichen Teil der Tiefe des Kochfelds 11 einnimmt. Vorteilhaft ist es eine übliche Kochfeldplatte aus Glaskeramik, besonders vorteilhaft mit üblicher rötlich-brauner Einfärbung. Im Bedienbereich 15 ist eine über die gesamte Breite gehende, entsprechend deutlich schmalere Bedienabdeckung 18 vorgesehen, die die Bedienfläche bildet. Unter dieser ist eine an sich übliche Bedieneinrichtung angeordnet, vorteilhaft mit Berührungsschaltern und LED-Anzeigen. Auch die Bedienabdeckung 18 kann vorteilhaft aus Glaskeramik sein, ebenso wie die Kochfeldplatte 17, vorteilhaft aus demselben Material für ein einheitliches optisches Erscheinungsbild. Da die Anforderungen an deren Oberflächeneigenschaften aber deutlich geringer sind, was mechanische Belastung betrifft, könnte die Bedienabdeckung 18 auch aus anderem Material ausgebildet sein.

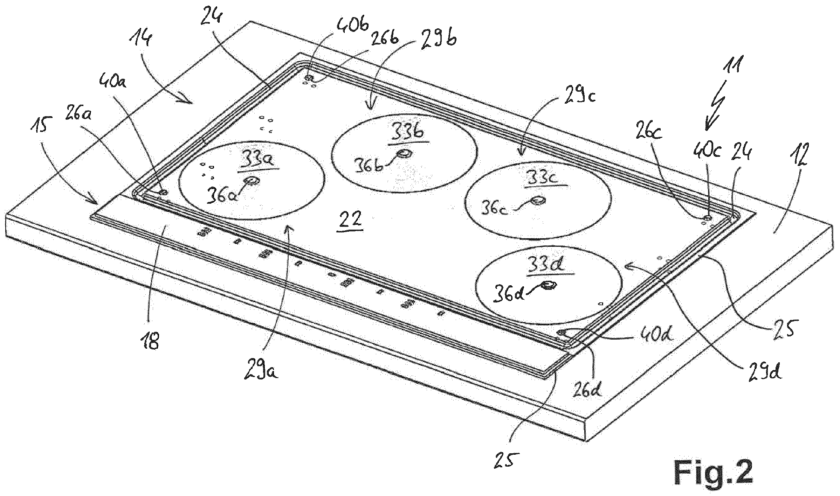

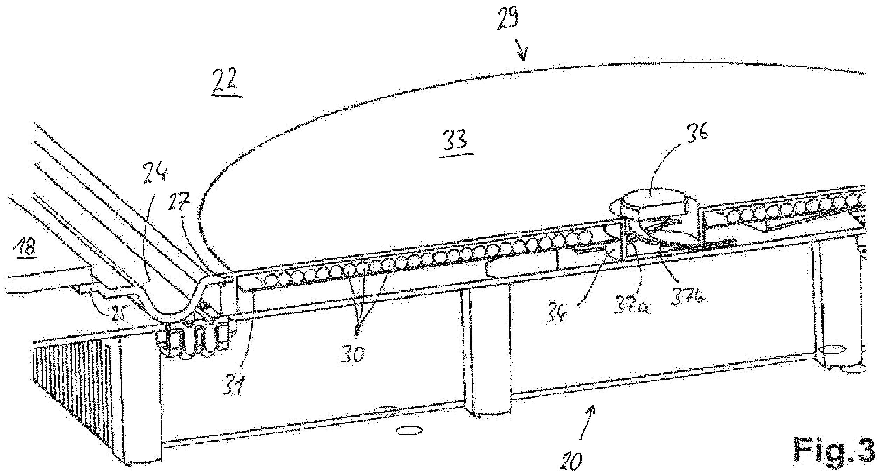

Wie eingangs beschrieben, ist die Kochfeldplatte 17 abnehmbar ausgebildet. In der Fig. 2 ist das Kochfeld 11 dargestellt, wenn die Kochfeldplatte 17 eben abgenommen ist. Man erkennt, dass die wesentliche Fläche unter der Kochfeldplatte 17 von einer Abdeckplatte 22 gebildet wird. Deren Verlauf ist aus den Schnittdarstellungen der Fig. 3 und 4, auf die an dieser Stelle verwiesen wird, genauer ersichtlich. Die Abdeckplatte 22 besteht vorteilhaft aus Metall und weist, wie insbesondere die Schnittdarstellungen der Fig. 3 und 4 zeigen, nahe dem Außenrand an den Lateralseiten und an der Hinterseite entlanglaufend eine Auffangrinne 24 als Vertiefung auf. Diese kann zwischen 1 cm und 2 cm breit sein und zwischen 0,5 cm und 1,5 cm tief sein. Außerhalb der Auffangrinne 24 verläuft ein Auflagebereich 25, der im Bedienbereich 15 erheblich breiter ausgebildet sein kann, so dass er zumindest an den Seiten bis vor den Bedienbereich 15 reicht, wie die Fig. 4 zeigt. Dieser Auflagebereich 25 läuft am Außenrand der Abdeckplatte 22 entlang und dient auch dazu, auf der Oberseite der Arbeitsplatte 12 aufzuliegen. Zusätzlich kann er zumindest teilweise, wie die Fig. 3 und 4 zeigen, unterhalb der Bedienabdeckung 18 verlaufen bzw. diese tragen. Vorteilhaft ist die Abdeckplatte 22 einstückig hergestellt, dies muss aber nicht so sein. Jedenfalls sollte die Auffangrinne 24 als umlaufende Vertiefung abgedichtet ausgebildet sein, insbesondere auch derart, dass sie durchgängig verläuft. Dies weist den Vorteil auf, dass sich eine bestimmte Menge an darin sammelnder Flüssigkeit besser auf die gesamte Länge der Auffangrinne 24 verteilen kann, und sie gleichzeitig ihre Schutzfunktion des Auffangens entlang des Randbereichs der Kochfeldplatte 17 bzw. um Heizeinrichtungen 29 herum erfüllen kann.

Es sind vier derartige Heizeinrichtungen 29a bis 29d am Kochfeld 11 vorgesehen in einer speziellen Verteilung und speziellen Durchmessern, die aber willkürlich sind. Es kann auch eine übliche Verteilung im Rechteck vorliegen. Die Heizeinrichtungen 29a bis 29d werden, wie die Fig. 3 zeigt, jeweils von Induktionsheizspulen 30 gebildet, vorteilhaft können sie ähnlich ausgebildet sein, besonders vorteilhaft nach dem gleichen Konstruktionsprinzip, jedoch können verschiedene Durchmesser oder Formen gewählt werden, wie dies dem Stand der Technik entspricht. Eine Induktionsheizspule 30 entsprechend Fig. 3 liegt auf einem Spulenträger 31 auf. Dieser kann wie üblich aus Mikanit oder anderem elektrisch isolierendem Material bestehen.

Damit eine Heizeinrichtung 29 mit Induktionsheizspule durch die metallische Abdeckplatte 22 hindurch wirken kann, ist darin eine Ausnehmung 27 vorgesehen. Diese kann einen etwas größeren Durchmesser aufweisen als die Induktionsheizspule 30 selbst, so dass deren Wirksamkeit nach oben als Kochstelle für einen aufzustellenden und zu beheizenden Kochtopf nicht beeinträchtigt wird. Wie gerade die Fig. 3 gut zeigt, kann Flüssigkeit, die möglicherweise unter die Kochfeldplatte 17 gelangen könnte, zuerst in der umlaufenden Auffangrinne 24 aufgefangen werden. Sollte diese aber möglicherweise überlaufen und somit die Flüssigkeit auch nach innen in Richtung auf den Mittelbereich der Abdeckplatte 22 zu laufen, könnte sie an der Ausnehmung 27 durch die Abdeckplatte 22 hindurchtreten und in das Innere des Kochfelds gelangen, was vermieden werden muss. Deswegen ist die Ausnehmung 27 mit einer Abdeckung 33 versehen bzw. verschlossen, möglichst dicht bzw. abgedichtet. Dazu kann eine solche Abdeckung 33, die vorteilhaft ein Kunststoffteil ist, auch eingeklebt werden, so dass eine Abdichtung erreicht wird. An der Unterseite dieser Abdeckung 33 kann die vorbeschriebene Induktionsheizspule 30 auch befestigt sein, alternativ wird sie daran einfach angedrückt.

Im Mittelbereich der Abdeckung 33 ist eine topfartige Vertiefung 34 vorgesehen, wie die Fig. 3 deutlich zeigt. Sie ist vorteilhaft integral ausgebildet, insofern also auch abgedichtet. In der Vertiefung 34 ist ein scheibenartiger Temperatursensor 36 angeordnet, der vorteilhaft ein eingangs genannter Widerstandssensor ist, also einen temperaturveränderlichen Widerstand aufweist, beispielsweise einen PT1000. Er weist zwei spiralartig nach unten geführte und gebogene Kontaktfedern 37a und 37b auf. Diese dienen zum einen zum elektrischen Anschluss an den Temperatursensor 36. Des Weiteren dienen die Kontaktfedern 37a und 37b mit ihrer speziellen Ausbildung dazu, den Temperatursensor 36 federnd in der Vertiefung 34 zu halten bzw. federelastisch an die Unterseite der aufzulegenden Kochfeldplatte 17 anzudrücken. Somit können die üblichen Vorteile eines hier anliegenden Temperatursensors erreicht werden, nämlich nicht nur für eine mögliche Heißanzeige für eine Bedienperson, sondern auch zur Funktionskontrolle der Heizeinrichtung 29. Dabei sollte der Temperatursensor 36 ein Stück weiter über die Abdeckung 33 bzw. die Ebene der Abdeckplatte 22 überstehen als die Kochfeldplatte 17 dann mit ihrer Unterseite als Abstand im aufgesetzten Zustand entsprechend Fig. 1 aufweist. So ist eben die sichere Anlage des Temperatursensors 36 an ihrer Unterseite gewährleistet.

Die Kontaktfedern 37a und 37b können an entsprechenden Durchbrüchen durch die Vertiefung 34 bzw. die Abdeckung 33 geführt sein. Hier sind vorteilhaft Gummidichtungen oder eine Verklebung oder ein Verguss möglich, um eine Abdichtung zu erreichen. Somit ist, wie beim Blick auf die Fig. 2 zu erkennen ist, dadurch keine Undichtigkeit des Inneren des Kochfelds 11 gegeben.

Im Zusammenhang mit der Schnittdarstellung der Fig. 4 soll im Folgenden nun die Möglichkeit zur Gewichtsmessung erläutert werden. Aus Fig. 2 ist zu ersehen, dass in den Eckbereichen des Kochbereichs 14 jeweils ein Durchbruch 26a bis 26d durch die Abdeckplatte 27 vorgesehen ist in Form einer runden Öffnung. Durch diese Durchbrüche 26 verlaufen entsprechend der Fig. 4 jeweils Auflagestützen 40a bis 40d, die also durch die Abdeckplatte 22 hindurch reichen und etwas über diese überstehen, beispielsweise 1 mm bis 5 mm. Die Kochfeldplatte 17 liegt dann, wie die Fig. 4 zeigt, auf diesen Auflagestützen 40 auf. Vorteilhaft können die Auflagestützen 40 an ihrer Oberseite jeweils eine Zentrierausnehmung 41 aufweisen. An der Unterseite der Kochfeldplatte 17 können entsprechende Zentriervorsprünge an der passenden Stelle in den Eckbereichen vorgesehen sein, so dass die Kochfeldplatte 17 nur in einer einzigen und festgelegten Position an dem Kochfeld 11 befestigt werden kann bzw. auf dieses aufgesetzt werden kann. Durch das Vorsehen der Zentrierausnehmungen 41 mit entsprechenden Vorsprüngen an der Unterseite der Kochfeldplatte 17 kann auch ein seitliches Verschieben der Kochfeldplatte verhindert werden.

Unter Umständen könnte entsprechend der Fig. 2 auch noch in der Mitte des Kochbereichs 14 ein weiterer Durchbruch 26 samt einer weiteren Auflagestütze 40 vorgesehen sein, damit gerade bei einer hier dargestellten, relativ breiten Kochfeldplatte auch eine mittige mechanische Unterstützung gegeben ist. Dies muss aber nicht sein. Eine Auswertung der Belastung der vier Auflagestützen 40a bis 40d samt entsprechenden Gewichtssensoren samt Ermittlung der Gewichtsbelastung an sich sowie deren Verteilung ist sicherlich einfacher durchzuführen.

Die Ausbildung der sogenannten Gewichtssensoren ist ebenfalls der Fig. 4 zu entnehmen. Die Auflagestütze 40 ist etwas unterhalb der Abdeckplatte 22 auf das linke freie Ende eines länglichen Trägers 43 aufgelegt bzw. darauf befestigt oder stützt sich darauf ab. Dieser Träger 43 ist auf nicht näher beschriebene Art und Weise mit seinem rechten Ende im Kochfeld 11 bzw. im hier zu erkennenden Kochfeldgehäuse 20 eingespannt. Er kann also sozusagen mit dem linken freien Ende aufgrund einer Gewichtsbelastung durch die Auflagestütze 40 samt Kochfeldplatte 17 darüber nach unten nachgeben bzw. sich nach unten bewegen.

Um dieses Nachgeben besser erfassen zu können und über eine Kraft-Weg-Kennlinie in eine Gewichtsbelastung umzurechnen, weist der Träger 43 einen länglichen Schlitz 45 auf, der wiederum erweiterte Endbereiche 46a und 46b aufweist. In den schmalen durchgehenden Bereichen des Trägers 43 oberhalb und unterhalb der erweiterten Endbereiche 46a und 46b sind Dehnmessstreifen 48a bis 48d angeordnet. Wird auf die Auflagestütze 40 links auf dem Träger 43 eine Kraft ausgeübt, so bewegt sich der Träger 43 sozusagen in etwa parallel nach unten, wodurch die vier Dehnmessstreifen 48a bis 48d jeweils unterschiedliche Verformung erfahren. Aus dieser bzw. aus deren Zusammenschaltung, insbesondere vorteilhaft und sehr einfach in einer sogenannten Wheatstone-Brücke, kann das Maß bzw. der Weg der Verformung bestimmt werden. Daraus wiederum kann über bekannte Zusammenhänge der Kraft-Weg-Kennlinie eine auf die Auflagestütze 40 wirkende Gewichtskraft bestimmt werden.

Die vorgenannte gemeinsame Auswertung aller vier Auflagestützen bzw. insgesamt aller Auflagestützen ermöglicht dann zum einen, das gesamte auf die Kochfeldplatte 17 aufgestellte Gewicht von Töpfen oder eines Topfes zu bestimmen. Des Weiteren kann auch noch die Gewichtsverteilung in etwa ermittelt werden, zumindest kann erkennbar leicht ermittelt werden, auf welche der durch die Heizeinrichtungen 29a bis 29d gebildeten Kochstellen ein Topf aufgesetzt worden ist.

Selbstverständlich könnte für die Gewichtsmessung auch eine andere Methode gewählt werden als die hier dargestellte mit dem länglichen Träger 43. So könnte beispielsweise direkt in der Auflagestütze 40, entweder am oberen oder am unteren Ende, ein direkt auf Druck wirkender Gewichtssensor vorgesehen sein, entweder als druckveränderlicher elektrischer Widerstand oder als Piezo-Gewichtssensor. Dies kennt der Fachmann aber grundsätzlich, so dass hier nichts Näheres dazu ausgeführt werden muss.

Aus der Fig. 4 ist auch noch zu erkennen, dass an der Unterseite der Kochfeldplatte 17 ein Plattenrahmen 17' als Winkelprofil angeordnet sein kann. Er ist mit einem langen Schenkel flächig an die Unterseite angeklebt, während ein kurzer, rechtwinklig nach unten abstehender Schenkel für die Steifigkeit als mechanische Verstärkung der Kochfeldplatte 17 dient. Dieser nach unten reichende Schenkel des Plattenrahmens 17' kann in etwa über der Auffangrinne 24 verlaufen. Dies dient zum einen als grobe Zentrierhilfe beim Aufsetzen der Kochfeldplatte 17 auf das Kochfeld 11. Vor allem aber ist es eine mechanische Verstärkung der Kochfeldplatte 17. Insofern könnten die Plattenrahmen 17' zwar auch aus mehreren, vorteilhaft insgesamt vier, einzelnen länglichen Elementen bestehen. Besonders vorteilhaft ist dies aber ein in sich verbundener Plattenrahmen, beispielsweise aus vier länglichen Teilen zusammengeschweißt, für eine möglichst große Stabilität und somit Unterstützung der Kochfeldplatte 17. Eine Anordnung des Plattenrahmens an dieser Stelle hat weitere Vorteile. Zum einen dient er als zusätzlicher Tropfschutz für eventuell einlaufende Flüssigkeit. Zum anderen taucht er in die Auffangrinne 24 ein, wodurch er höher ausgeführt sein kann, als wenn er über der Abdeckplatte 22 verlaufen würde, die ja einen relativ geringen Abstand zur Kochfeldplatte 17 haben soll.

In der Fig. 4 ist auch noch zu ersehen, wie das Kochfeldgehäuse 20 in dem entsprechenden Ausschnitt 13 in der Arbeitsplatte 12 angeordnet ist. Dabei liegt eben der Auflagebereich 25 der Abdeckplatte 22 außerhalb der Auffangrinne 24, hier sogar noch außerhalb der Bedieneinrichtung 19 bzw. des Bedienbereichs 15, auf der Oberseite der Arbeitsplatte 12 auf. In ähnlicher Form könnte auch mit einer stufenartigen Zwischenausnehmung eine sogenannte versenkte Bauweise des Kochfelds 11 in der Arbeitsplatte 12 realisiert werden, bei der sozusagen die Oberseite der Kochfeldplatte 17 und auch der Bedienabdeckung 18 in etwa auf derselben Höhe verläuft wie die Oberseite der Arbeitsplatte 12.

Ein Vorteil für eine leichtere Reinigung des Kochfelds 11, falls in die Auffangrinne 24 Flüssigkeit oder kleinere Verunreinigungen wie Krümel oder Brösel gekommen sind, besteht darin, dass die Kochfeldplatte 17 einfach und vor allem auch werkzeuglos vom Kochfeld 11 abgenommen werden kann bzw. einfach hochgehoben werden kann. Dies ist anhand der Fig. 4 auch leicht vorstellbar, wenn nämlich in den Spalt zwischen Kochfeldplatte 17 und Bedienabdeckung 18 mit einem schmalen Gegenstand hineingefahren wird, um sozusagen die Vorderkante der Kochfeldplatte 17 nach oben zu heben, so dass sie dann mit den Fingern untergriffen und angehoben werden kann.

Die Bedienabdeckung 18 entsprechend der Fig. 4 ist vorteilhaft fest und dauerhaft aufgebracht, insbesondere aufgeklebt. Dabei kann sie besonders vorteilhaft auf die Abdeckplatte 22 in diesem Bereich bzw. den Auflagebereich 25 der Abdeckplatte 22 aufgeklebt werden.

## Patentansprüche

1. Kochfeld (11) mit einer Kochfeldplatte (17), darunter angeordneten Heizeinrichtungen (29a-d), mindestens drei Auflagestützen (40a-d) und einer Bedieneinrichtung (19), wobei
- die Kochfeldplatte (17) die Heizeinrichtungen (29a-d) überdeckt,
- das Kochfeld (11) ein Kochfeldgehäuse (20) unter der Kochfeldplatte (17) aufweist,
- das Kochfeldgehäuse die Heizeinrichtungen (29a-d) enthält bzw. aufweist,
- die Kochfeldplatte (17) gegenüber dem Kochfeldgehäuse (20) aufgesetzt ist auf den mindestens drei Auflagestützen (40a-d) derart, dass die Kochfeldplatte (17) gegenüber dem Kochfeldgehäuse (20) in vertikaler Richtung bewegbar ist,
- die Kochfeldplatte (17) ausschließlich durch die mindestens drei Auflagestützen getragen (40a-d) ist bzw. ausschließlich an den mindestens drei Auflagestützen mit dem Kochfeldgehäuse (20) bzw. dem übrigen Kochfeld (11) verbunden ist,
- die Auflagestützen (40a-d) Gewichtssensoren (48a-d) umfassen, die vorgesehen sind zur Messung der Gewichtsbelastung der auf den Auflagestützen aufliegenden Kochfeldplatte (17) samt möglicher Last darauf,
**gekennzeichnet durch** eine obere Abdeckplatte (22), die mindestens die Fläche der Kochfeldplatte (17) überdeckt und mit Abstand von 1 mm bis 10 mm unterhalb der Kochfeldplatte verläuft, wobei
- die Verbindung der Kochfeldplatte (17) mit den Auflagestützen (40a-d) durch die Abdeckplatte (22) verläuft,
- die Abdeckplatte (22) von einer linken Lateralseite des Kochfelds (11) bis zu einer rechten Lateralseite reicht und bis zu einer hinteren Lateralseite,
- die Abdeckplatte (22) Ausnehmungen (27) aufweist für die Heizeinrichtungen (29a-d) derart, dass die Heizeinrichtungen innerhalb der Ausnehmungen angeordnet sind,
- die Ausnehmungen (27) mit einer Abdeckung (33a-d) dichtend verschlossen sind,
- direkt unter der Abdeckung (33a-d) eine Heizeinrichtung (29a-d) angeordnet ist mit einem Abstand von 0,5 mm bis 10 mm zur Unterseite der Abdeckung.

2. Kochfeld nach Anspruch 1, **dadurch gekennzeichnet, dass** zumindest in einem vorderen Bereich der Kochfeldplatte (17) eine längliche Vertiefung (24) in der Abdeckplatte (22) vorgesehen ist, die parallel zur Vorderkante der Kochfeldplatte (17) verläuft, wobei insbesondere die Vertiefung (24) zwischen 1 mm bis 30 mm weg von der Vorderkante der Kochfeldplatte (17) zu einem Mittelbereich hin versetzt ist.

3. Kochfeld nach Anspruch 2, **dadurch gekennzeichnet, dass** die Vertiefung (24) auch an den Lateralseiten der Kochfeldplatte (17) in der Abdeckplatte (22) vorgesehen ist, insbesondere auch an der hinteren Lateralseite, wobei vorzugsweise die Vertiefung (24) durchgängig und/oder gleichartig ausgebildet umläuft mit einem Bereich, innerhalb dessen die Heizeinrichtungen (29a-d) angeordnet sind.

4. Kochfeld nach einem der vorhergehenden Ansprüche, **dadurch gekennzeichnet, dass** zumindest entlang der linken und der rechten Lateralseite des Kochfelds (11) die Abdeckplatte (22) bis an eine Vorderkante des Kochfelds verläuft und somit auch links und rechts neben der Bedieneinrichtung (19) vorgesehen ist.

5. Kochfeld nach einem der vorhergehenden Ansprüche, **dadurch gekennzeichnet, dass** in der Vertiefung (24) keinerlei Durchbrechung durch die Abdeckplatte (22) vorgesehen ist, wobei insbesondere innerhalb der Vertiefung (24) zu einem Mittelbereich hin ein Streifenbereich vorgesehen ist, der mindestens 1 cm bis 5 cm breit ist und keine Durchbrechung durch die Abdeckplatte (22) aufweist.

6. Kochfeld nach einem der vorhergehenden Ansprüche, **dadurch gekennzeichnet, dass** ein Temperatursensor (36a-b) unterhalb der Kochfeldplatte (17) vorgesehen ist, der elastisch bzw. federnd an die Unterseite der Kochfeldplatte (17) angedrückt ist, vorzugsweise mittels Federn, insbesondere elektrischen Kontaktfedern (37a, b).

7. Kochfeld nach Anspruch 6, **dadurch gekennzeichnet, dass** der Temperatursensor (36a-d) in einem Mittelbereich der Heizeinrichtung (29a-d) angeordnet ist, vorzugsweise bei Induktionsheizspulen als Heizeinrichtung in einem Mittelbereich ohne Windungen, wobei insbesondere der Temperatursensor (36a-b) in einer Vertiefung (34) in der Abdeckung (33a-d) angeordnet ist, wobei vorzugsweise die Vertiefung (34) tiefer liegt als die Heizeinrichtung (29a-d).

8. Kochfeld nach einem der vorhergehenden Ansprüche, **dadurch gekennzeichnet, dass** oberhalb der Bedieneinrichtung (19) eine Bedienabdeckung (18) angeordnet ist, vorzugsweise aus demselben Material wie die Kochfeldplatte (7) bestehend und insbesondere mit gleichbleibender Breite und/oder die von der linken Lateralseite der Kochfeldplatte (7) bis zur rechten Lateralseite der Kochfeldplatte reicht.

9. Kochfeld nach Anspruch 8, **dadurch gekennzeichnet, dass** die Bedienabdeckung (18) einen Abstand von 1 mm bis 10 mm zu der Kochfeldplatte (17) aufweist, wobei die Bedienabdeckung (18) in diesem Bereich direkt und dichtend auf der Abdeckplatte (22) aufliegt, wobei sich ein Spalt zwischen der Bedienabdeckung (18) und der Kochfeldplatte (17) frei bis zu der Vertiefung (24) in der Abdeckplatte (22) zieht.

10. Kochfeld nach einem der vorhergehenden Ansprüche, **dadurch gekennzeichnet, dass** die Auflagestützen (40a-d) fest im Kochfeld (111) bzw. im Kochfeldgehäuse (20) montiert sind und die Kochfeldplatte (17) lose darauf aufgelegt ist, insbesondere mittels Positionierhilfen bzw. Zentrierhilfen (41) nach Art von Vorsprüngen und Umrandungen.

11. Kochfeld nach einem der vorhergehenden Ansprüche, **dadurch gekennzeichnet, dass** die Auflagestützen gebildet sind von parallel zur Kochfeldplatte (17) verlaufenden, an einem freien Ende am Kochfeldgehäuse (20) unbeweglich gelagerten Trägern (43), an deren anderem freien Ende eine nach oben ragende Auflagestütze (40a-d) vorgesehen ist, wobei in dem Träger (43) ein längs verlaufender Schlitz (45) mit erweiterten Endbereichen (46a, b) vorgesehen ist und oberhalb und unterhalb der Endbereiche Dehnmessstreifen (48a-d) angeordnet sind, die als Wheatstone-Brücke verschaltet sind.

12. Kochfeld nach einem der vorhergehenden Ansprüche, **dadurch gekennzeichnet, dass** die Kochfeldplatte (17) an einem äußeren Randbereich einen Rahmen (17') oder Seitenteile zur Verzierung und/oder als mechanische Verstärkung aufweist, insbesondere nur an der Unterseite der Kochfeldplatte (17).

## Claims

1. Cooktop (11) having a cooktop plate (17), heating devices (29a-d) arranged underneath, at least three application supports (40a-d) and an operator control device (19), wherein
- the cooktop plate (17) covers the heating devices (29a-d),
- the cooktop (11) has a cooktop housing (20) underneath the cooktop plate (17),
- the cooktop housing contains or includes the heating devices (29a-d),
- the cooktop plate (17) is placed, in relation to the cooktop housing (20), on the at least three application supports (40a-d) such that the cooktop plate (17) is movable in the vertical direction in relation to the cooktop housing (20),
- the cooktop plate (17) is held exclusively by the at least three application supports (40a-d), or is connected to the cooktop housing (20) or the remaining cooktop (11) exclusively on the at least three application supports,
- the application supports (40a-d) comprise weight sensors (48a-d) which are provided for measuring the weight load of the cooktop plate (17), together with any load thereon, resting on the application supports,
**characterized by**
an upper cover plate (22) which covers at least the surface area of the cooktop plate (17) and extends below the cooktop plate at a distance of 1 mm to 10 mm, wherein
- the connection of the cooktop plate (17) to the application supports (40a-d) extends through the cover plate (22),
- the cover plate (22) reaches from a left lateral side of the cooktop (11) up to a right lateral side and up to a rear lateral side,
- the cover plate (22) has recesses (27) for the heating devices (29a-d) such that the heating devices are disposed within the recesses,
- the recesses (27) are sealingly closed by a cover (33a-d),
- a heating device (29a-d) is disposed directly underneath the cover (33a-d) at a distance of 0.5 mm to 10 mm to the bottom side of the cover.

2. Cooktop according to claim 1, **characterized in that** at least in a front region of the cooktop plate (17) an elongate recess (24) is provided in the cover plate (22), said recess extending in parallel to the front edge of the cooktop plate (17), wherein in particular the recess (24) is offset away from the front edge of the cooktop plate (17) towards a central region at a distance of 1 mm to 30 mm.

3. Cooktop according to claim 2, **characterized in that** the recess (24) is provided also on the lateral sides of the cooktop plate (17) in the cover plate (22), in particular also on the rear lateral side, wherein preferably the recess (24) is circumferentially continuous and/or uniform in design within a zone in which the heating devices (29a-d) are arranged.

4. Cooktop according to any of the preceding claims, **characterized in that** at least along the left and the right lateral sides of the cooktop (11) the cover plate (22) extends up to a front edge of the cooktop and, thus, is provided also to the left and to the right next to the operator control device (19).

5. Cooktop according to any of the preceding claims, **characterized in that** in the recess (24) there is no aperture whatsoever through the cover plate (22) provided, wherein in particular within the recess (24) towards a central region a strip zone is provided, which has a width of at least 1 cm to 5 cm and does not include any aperture through the cover plate (22).

6. Cooktop according to any of the preceding claims, **characterized in that** a temperature sensor (36a-b) is provided below the cooktop plate (17), which sensor is pressed to the bottom side of the cooktop plate (17) in an elastic or resilient manner, preferably by means of springs, in particular electrical contact springs (37a, b).

7. Cooktop according to claim 6, **characterized in that** the temperature sensor (36a-b) is disposed in a central region of the heating device (29a-d), preferably with induction heating coils as a heating device in a central region without coils, wherein in particular the temperature sensor (36a-b) is disposed in a recess (34) in the cover (33a-d), wherein preferably the recess (34) is located deeper than the heating device (29a-d).

8. Cooktop according to any of the preceding claims, **characterized in that** above the operator control device (19) an operator control cover (18) is disposed, preferably made of the same material as the cooktop plate (7), and in particular having a constant width and/or reaching from the left lateral side of the cooktop plate (7) up to the right lateral side of the cooktop plate.

9. Cooktop according to claim 8, **characterized in that** the operator control cover (18) is spaced from the cooktop plate (17) at a distance from 1 mm to 10 mm, wherein the operator control cover (18) in this zone rests directly and sealingly on the cover plate (22), wherein a gap between the operator control cover (18) and the cooktop plate (17) extends freely up to the recess (24) in the cover plate (22).

10. Cooktop according to any of the preceding claims, **characterized in that** the application supports (40a-d) are fixedly installed in the cooktop (111) or in the cooktop housing (20) and the cooktop plate (17) is loosely placed thereon, in particular by means of positioning aids or centering aids (41) in the type of projections and borders.

11. Cooktop according to any of the preceding claims, **characterized in that** the application supports are composed of bearings (43) extending in parallel to the cooktop plate (17) and immovably mounted on a free end of the cooktop housing (20), with an upwards projecting application support (40a-d) being provided at the other free end, wherein a lengthwise extending slot (45) having enlarged end regions (46a, b) is provided in the bearing (43), and strain gauges (48a-d) connected to a Wheatstone bridge are disposed above and below the end regions.

12. Cooktop according to any of the preceding claims, **characterized in that** the cooktop plate (17) has, in an outer edge region, a frame (17') or lateral parts for decoration and/or as mechanical reinforcement, in particular provided only on the bottom side of the cooktop plate (17).

## Revendications

1. Table de cuisson (11) avec une plaque de cuisson (17), des dispositifs de chauffage (29a-d) disposés sous celle-ci, au moins trois pieds d'appui (40a-d) et un dispositif de commande (19), dans laquelle
- la plaque de cuisson (17) recouvre les dispositifs de chauffage (29a-d),
- la table de cuisson (11) présente un boîtier de table de cuisson (20) en dessous de la plaque de cuisson (17),
- le boîtier de table de cuisson contient ou présente les dispositifs de chauffage (29a-d),
- la plaque de cuisson (17) est posée par rapport au boîtier de table de cuisson (20) sur lesdits au moins trois pieds d'appui (40a-d), de telle manière que la plaque de cuisson (17) puisse être déplacée en direction verticale par rapport au boîtier de table de cuisson (20),
- la plaque de cuisson (17) est portée exclusivement par lesdits au moins trois pieds d'appui ou est assemblée exclusivement auxdits au moins trois pieds d'appui (40a-d) au boîtier de table de cuisson (20) ou au reste de la table de cuisson (11),
- les pieds d'appui (40a-d) comprennent des détecteurs de poids (48a-d), qui sont prévus pour mesurer la charge pondérale de la plaque de cuisson (17) posée sur les pieds d'appui, y compris la charge éventuelle sur celle-ci,
**caractérisée par** une plaque de recouvrement supérieure (22), qui recouvre au moins la face de la plaque de cuisson (17) et qui est placée à une distance de 1 mm à 10 mm en dessous de la plaque de cuisson, dans laquelle
- la liaison de la plaque de cuisson (17) avec les pieds d'appui (40a-d) passe à travers la plaque de recouvrement (22),
- la plaque de recouvrement (22) s'étend d'un côté latéral gauche de la table de cuisson (11) à un côté latéral droit et jusqu'à un côté latéral arrière,
- la plaque de recouvrement (22) présente des évidements (27) pour les dispositifs de chauffage (29a-d), de telle manière que les dispositifs de chauffage soient disposés à l'intérieur des évidements,
- les évidements (27) sont fermés de façon étanche avec un couvercle (33a-d),
- un dispositif de chauffage (29a-d) est disposé directement en dessous du couvercle (33a-d) à une distance de 0,5 mm à 10 mm du côté inférieur du couvercle.

2. Table de cuisson selon la revendication 1, **caractérisée en ce qu'**il est prévu au moins dans une région avant de la plaque de cuisson (17) un creux allongé (24) dans la plaque de recouvrement (22), qui est parallèle au bord avant de la plaque de cuisson (17), dans laquelle le creux (24) est en particulier écarté environ de 1 mm à 30 mm du bord avant de la plaque de cuisson (17) en direction d'une région centrale.

3. Table de cuisson selon la revendication 2, **caractérisée en ce que** le creux (24) est également prévu sur les côtés latéraux de la plaque de cuisson (17) dans la plaque de recouvrement (22), en particulier aussi sur le côté latéral arrière, dans laquelle le creux (24) entoure de préférence de façon continue et/ou de forme identique avec une région à l'intérieur de laquelle les dispositifs de chauffage (29ad) sont disposés.

4. Table de cuisson selon l'une quelconque des revendications précédentes, **caractérisée en ce que** la plaque de recouvrement (22) s'étend au moins le long des côtés latéraux gauche et droit de la table de cuisson (11) jusqu'à un bord avant de la table de cuisson et est dès lors également prévue à gauche et à droite à côté du dispositif de commande (19).

5. Table de cuisson selon l'une quelconque des revendications précédentes, **caractérisée en ce qu'**il n'est prévu dans le creux (24) aucune percée à travers la plaque de recouvrement (22), dans laquelle il est prévu en particulier à l'intérieur du creux (24) en direction d'une zone centrale une zone de bande, qui est large d'au moins 1 cm à 5 cm et qui ne présente aucune percée à travers la plaque de recouvrement (22).

6. Table de cuisson selon l'une quelconque des revendications précédentes, **caractérisée en ce qu'**il est prévu un capteur de température (36a-b) en dessous de la plaque de cuisson (17), qui est pressé élastiquement ou par ressort sur le côté inférieur de la plaque de cuisson (17), de préférence au moyen de ressorts, en particulier de ressorts de contact électrique (37a, b).

7. Table de cuisson selon la revendication 6, **caractérisée en ce que** le capteur de température (36a-d) est disposé dans une région centrale du dispositif de chauffage (29a-d), en particulier pour des bobines de chauffage par induction comme dispositif de chauffage dans une région centrale sans spires, dans laquelle en particulier le capteur de température (36a-b) est disposé dans un creux (34) dans le couvercle (33a-d), dans laquelle le creux (34) est de préférence situé plus profondément que le dispositif de chauffage (29a-d).

8. Table de cuisson selon l'une quelconque des revendications précédentes, **caractérisée en ce qu'**un couvercle de commande (18) est disposé au-dessus du dispositif de commande (19), se composant de préférence du même matériau que la plaque de cuisson (7) et en particulier avec une largeur constante et/ou qui court du côté latéral gauche de la plaque de cuisson (7) jusqu'au côté latéral droit de la plaque de cuisson.

9. Table de cuisson selon la revendication 8, **caractérisée en ce que** le couvercle de commande (18) présente une distance de 1 mm à 10 mm de la plaque de cuisson (17), dans laquelle le couvercle de commande (18) repose dans cette région directement et de façon étanche sur la plaque de recouvrement (22), dans laquelle une fente entre le couvercle de commande (18) et la plaque de cuisson (17) s'étire librement jusqu'au creux (24) dans la plaque de recouvrement (22).

10. Table de cuisson selon l'une quelconque des revendications précédentes, **caractérisée en ce que** les pieds d'appui (40a-d) sont montés fixement dans la table de cuisson (111) ou dans le boîtier de table de cuisson (20) et la plaque de cuisson (17) est posée librement sur ceux-ci, en particulier au moyen d'accessoires de positionnement ou d'accessoires de centrage (41) de types protubérances et encadrements.

11. Table de cuisson selon l'une quelconque des revendications précédentes, **caractérisée en ce que** les pieds d'appui sont formés par des supports (43) s'étendant parallèlement à la plaque de cuisson (17) et montés de façon immobile par une extrémité libre sur le boîtier de table de cuisson (20), à l'autre extrémité libre desquels il est prévu un pied d'appui (40a-d) orienté vers le haut, dans laquelle il est prévu dans le support (43) une fente (45) s'étendant longitudinalement avec des régions d'extrémité élargies (46a, b) et des jauges de contrainte (48a-d) sont disposées au-dessus et en dessous des régions d'extrémité, et sont connectées en pont de Wheatstone.

12. Table de cuisson selon l'une quelconque des revendications précédentes, **caractérisée en ce que** la plaque de cuisson (17) présente sur une région de bord extérieure un cadre (17') ou des pièces latérales pour la garniture et/ou le renforcement mécanique, en particulier uniquement sur le côté inférieur de la plaque de cuisson (17).
